# EUROPÄISCHE PATENTANMELDUNG

(11) **EP 4 664 208 A1**
(43) Veröffentlichungstag der Anmeldung: **17.12.2025**
(21) Anmeldenummer: 24182273.3
(22) Anmeldetag: 14.06.2024
(51) Int. Cl.: G05B 9/02

(54) **ARBEITSGERÄT**

(71) Anmelder: Rotzler Holding GmbH + Co. KG, 79585 Steinen (DE)
(72) Erfinder: Römer, Ferdinand, 79677 Schönenberg (DE)
(74) Vertreter: Karzel, Philipp

(57) **Zusammenfassung**

Die Erfindung betrifft ein Arbeitsgerät umfassend ein Aktorensystem (10) mit mindestens einem Aktor (11, 12, 13) und eine Steuereinheit (20) zur Steuerung des Aktorensystems (10). Die Steuereinheit (20) gibt zur Steuerung des Aktorensystems (10) eine Handlungsanweisung für das Aktorensystem (10) aus. Die Steuereinheit (20) umfasst eine Anweisungseinheit (21) und eine Sicherheitseinheit (22), die funktional zwischen der Anweisungseinheit (21) und dem Aktorensystem (10) angeordnet ist. Die Anweisungseinheit (21) erstellt eine vorläufige Handlungsanweisung für das Aktorensystem (10). In der Sicherheitseinheit (22) ist eine Menge an unzulässigen Handlungsanweisungen definiert. Die Sicherheitseinheit (22) überprüft, ob die vorläufige Handlungsanweisung in der Menge der unzulässigen Handlungsanweisungen liegtund die Weiterleitung der vorläufigen Handlungsanweisung an das Aktorensystem (10) nur dann in unveränderter Form zu, wenn die vorläufige Handlungsanweisung außerhalb der Menge der unzulässigen Handlungsanweisungen liegt und/oder ob die vorläufige Handlungsanweisung in der Menge der zulässigen Handlungsanweisungen liegt und die Weiterleitung der vorläufigen Handlungsanweisung an das Aktorensystem (10) nur dann in unveränderter Form zulässt, wenn die vorläufige Handlungsanweisung innerhalb der Menge der zulässigen Handlungsanweisungen liegt.

## Beschreibung

Die Erfindung betrifft ein Arbeitsgerät nach dem Oberbegriff des Anspruchs 1 und eine Anordnung umfassend mindestens eine Bedienvorrichtung und ein solches Arbeitsgerät.

Bei Arbeitsgeräten umfassend ein Aktorensystem mit mindestens einem Aktor und einer Steuereinheit zur Steuerung des Aktorensystems ist es üblich, dass die Steuereinheit zur Steuerung des Aktorensystems eine Handlungsanweisung für das Aktorensystem ausgibt. Hierbei muss gewährleistet sein, dass die Handlungsanweisung nicht zu Betriebszuständen führt, die das Arbeitsgerät, den Bediener des Arbeitsgeräts oder die Umgebung des Arbeitsgeräts gefährden oder schädigen. Insbesondere bei Weiterentwicklungen oder Anpassungen der Steuereinheit, beispielsweise in Form von Änderungen an der Software der Steuereinheit, muss zuverlässig gewährleistet sein, dass solche Betriebszustände nicht auftreten. Dies stellt insbesondere ein Problem dar, wenn das Arbeitsgerät an einen Endabnehmer ausgeliefert wird und diesem die Möglichkeit gegeben sein soll, die Steuereinheit, beispielsweise durch Änderung der Software, an spezielle Bedürfnisse selbst anzupassen. Aber auch bei einer werksseitigen Weiterentwicklung der Steuereinheit, insbesondere der Software der Steuereinheit ist nicht ausgeschlossen, dass in Folge der Weiterentwicklung unzulässige Betriebszustände des Arbeitsgeräts auftreten.

Der Erfindung liegt die Aufgabe zugrunde, ein gattungsgemäßes Arbeitsgerät derart weiterzubilden, dass das Arbeitsgerät flexibel anpassbar und weiterentwickelbar ist und gleichzeitig die Sicherheit des Arbeitsgeräts gewährleistet ist.

Diese Aufgabe wird durch ein Arbeitsgerät mit den Merkmalen des Anspruchs 1 gelöst.

Die Erfindung sieht vor, dass die Steuereinheit eine Anweisungseinheit und eine Sicherheitseinheit umfasst. Die Sicherheitseinheit ist funktional zwischen der Anweisungseinheit und dem Aktorensystem angeordnet. Die Anweisungseinheit erstellt eine vorläufige Handlungsanweisung für das Aktorensystem. In der Sicherheitseinheit ist eine Menge an unzulässigen Handlungsanweisungen und/oder an zulässigen Handlungsanweisungen definiert. Die Sicherheitseinheit überprüft, ob die vorläufige Handlungsanweisung in der Menge der unzulässigen Handlungsanweisungen liegt. Alternativ oder zusätzlich überprüft die Sicherheitseinheit, ob die vorläufige Handlungsanweisung in der Menge der zulässigen Handlungsanweisungen liegt. Die Sicherheitseinheit lässt die Weiterleitung der vorläufigen Handlungsanweisung an das Aktorensystem nur dann in unveränderter Form zu, wenn die vorläufige Handlungsanweisung außerhalb der Menge der unzulässigen Handlungsanweisungen liegt. Alternativ oder zusätzlich lässt die Sicherheitseinheit die Weiterleitung der vorläufigen Handlungsanweisung an das Aktorensystem nur dann in unveränderter Form zu, wenn die vorläufige Handlungsanweisung innerhalb der Menge der zulässigen Handlungsanweisungen liegt. Dadurch ist eine Veränderung der Steuereinheit durch einen Zugriff auf die Anweisungseinheit, insbesondere auf die Software der Anweisungseinheit, möglich. Durch die Sicherheitseinheit ist gleichzeitig sichergestellt, dass nach einer Veränderung der Steuereinheit, insbesondere durch eine Veränderung der Anweisungseinheit, insbesondere durch eine Veränderung der Software der Anweisungseinheit, keine Handlungsanweisung an das Aktorensystem geschickt wird, die eine unzulässige Handlungsanweisung ist. Dadurch lässt sich die Steuereinheit, insbesondere die Anweisungseinheit flexibel auf die Bedürfnisse eines Endabnehmers auch vom Endabnehmer selbst anpassen. Auch eine werksseitige Weiterentwicklung der Steuereinheit, insbesondere der Anweisungseinheit, insbesondere der Software der Anweisungseinheit, ist problemlos möglich. Fehler, die möglicherweise bei einer solchen Weiterentwicklung entstehen und zu unzulässigen Handlungsanweisungen für das Aktorensystem führen, werden im Betrieb des Arbeitsgeräts nach Erstellung einer vorläufigen Handlungsanweisung durch die Anweisungseinheit von der Sicherheitseinheit erkannt. Eine Weiterleitung einer unzulässigen Handlungsanweisung an das Aktorensystem kann dann vermieden werden. Durch das erfindungsgemäße Arbeitsgerät kann auch die Weiterleitung aller sonstigen unzulässigen Handlungsanweisungen an das Aktorensystem verhindert werden. Insbesondere kann der Bediener der Anweisungseinheit die Erstellung einer bestimmten Handlungsanweisung vorschlagen und ein solcher Vorschlag wird dann durch die Sicherheitseinheit überprüft und ggf. aussortiert. Dadurch erhöht sich die Flexibilität des Arbeitsgeräts weiter. Es kann auf einfache und sichere Weise an die Bedürfnisse des Bedieners und/oder des Arbeitsumfelds angepasst werden.

Eine unzulässige Handlungsanweisung, die von dem Aktorensystem durchgeführt wird, führt zu einem Betriebszustand oder einer Handlung des Aktorensystems, die die Sicherheit des Bedieners, des Arbeitsgeräts oder des Umfelds beeinträchtigt oder gefährdet, insbesondere im Sinne der Norm ISO 13849.

Insbesondere unterbindet die Sicherheitseinheit eine Weiterleitung einer vorläufigen Handlungsanweisung an das Aktorensystem, wenn sie in der Menge der unzulässigen Handlungsanweisungen liegt. Alternativ oder zusätzlich unterbindet die Sicherheitseinheit eine Weiterleitung einer vorläufigen Handlungsanweisung an das Aktorensystem, wenn sie außerhalb der Menge der zulässigen Handlungsanweisungen liegt. Zweckmäßig gibt die Steuereinheit dann entweder gar keine Handlungsanweisung oder eine modifizierte Handlungsanweisung aus, wobei die modifizierte Handlungsanweisung dann außerhalb der Menge der unzulässigen Handlungsanweisungen oder innerhalb der Menge der zulässigen Handlungsanweisungen liegt.

In vorteilhafter Weiterentwicklung der Erfindung ist vorgesehen, dass die Steuereinheit, insbesondere die Anweisungseinheit, zur Kopplung mit mindestens einer Bedienvorrichtung ausgelegt ist. Mittels der mindestens einen Bedienvorrichtung kann der Bediener vorgeben, welche vorläufige Handlungsanweisung die Anweisungseinheit erstellt. Aufgrund der Sicherheitseinheit sind an die Ausgestaltung der Bedienvorrichtung, insbesondere hinsichtlich der Sicherheit, keinerlei Anforderungen gestellt. Derselbe Typ einer Bedienvorrichtung kann für verschiedenste Arbeitsgeräte verwendet werden. Das Arbeitsgerät stellt dann sicher, dass die von der Bedienvorrichtung vorgegebenen vorläufigen Handlungsanweisungen, insbesondere hinsichtlich der Betriebssicherheit, zulässig sind. Die Weiterentwicklung des Arbeitsgeräts, insbesondere der Steuereinheit, insbesondere der Anweisungseinheit ist vollkommen unabhängig von der Bedienvorrichtung möglich. Auch nach der Weiterentwicklung oder Änderung des Arbeitsgeräts, insbesondere der Steuereinheit, insbesondere der Anweisungseinheit, kann dieselbe Bedienvorrichtung verwendet werden. Eine Anpassung der Bedienvorrichtung ist nicht erforderlich. Dies reduziert die Herstellungskosten. Dadurch, dass die Bedienvorrichtung ohne Berücksichtigung von Sicherheitsaspekten in der Software oder in einer Bedienoberfläche der Bedienvorrichtung einsetzbar ist, kann die Bedienvorrichtung auf einfache Weise und kostengünstig hergestellt werden.

Vorteilhaft übergibt die Steuereinheit, insbesondere die Sicherheitseinheit, bei der Kopplung der mindestens einen Bedienvorrichtung an die Steuereinheit, eine Bedienoberfläche, insbesondere eine Menüstruktur, an die mindestens eine Bedienvorrichtung. Dies ermöglicht einen sehr flexiblen Einsatz der mindestens einen Bedienvorrichtung für verschiedene Arbeitsgeräte. Bei der Kopplung der Bedienvorrichtung mit dem jeweiligen Arbeitsgerät erhält die Bedienvorrichtung dann jeweils die Bedienoberfläche, insbesondere die Menüstruktur von dem Arbeitsgerät selbst. Die Bedienvorrichtung ist dadurch flexibel einsetzbar und auf einfache Weise herstellbar. Eine Anpassung der Bedienvorrichtung an das jeweilige Arbeitsgerät ist nicht erforderlich. Dieselbe Bedienvorrichtung kann für verschiedene Arbeitsgeräte verwendet werden.

Insbesondere sind mehrere Bedienvorrichtungen mit der Steuereinheit koppelbar. Vorteilhaft kann der Bediener mittels der mehreren Bedienvorrichtungen vorgeben, welche vorläufigen Handlungsanweisungen die Anweisungseinheit erstellt. Durch die mehreren Bedienvorrichtungen können auf diese Weise komplexe vorläufige Handlungsanweisungen von der Anweisungseinheit erstellt werden. Insbesondere kann eine solche komplexe vorläufige Handlungsanweisung mehrere Aktoren des Aktorensystems betreffen. Die Steuereinheit, insbesondere die Sicherheitseinheit, prüft, ob der Betrieb der mehreren Aktoren zur gleichen Zeit einer zulässigen Handlungsanweisung entspricht.

Es kann vorgesehen sein, dass jeder Bedienvorrichtung der mehreren Bedienvorrichtungen eine Teilanweisung zugeordnet ist. Insbesondere ist die Teilanweisung von der jeweiligen Bedienvorrichtung an die Anweisungseinheit übermittelbar. Vorteilhaft erstellt die Anweisungseinheit aus den einzelnen Teilanweisungen, die von den verschiedenen Bedienvorrichtungen stammen, die vorläufige Handlungsanweisung. Wenn die so erstellte vorläufige Handlungsanweisung innerhalb der Menge der unzulässigen Handlungsanweisungen oder (alternativ oder zusätzlich) außerhalb der Menge der zulässigen Handlungsanweisungen liegt, verändert die Sicherheitseinheit die vorläufige Handlungsanweisung insbesondere so, als wäre die zeitlich letzte Teilanweisung nicht zur Erstellung der vorläufigen Handlungsanweisung berücksichtigt worden. Zweckmäßig ist das Arbeitsgerät so ausgelegt, dass dieser Prozess der Veränderung der vorläufigen Handlungsanweisung so, als wäre die zeitlich letzte Teilanweisung nicht zur Erstellung der vorläufigen Handlungsanweisung berücksichtigt worden, solange wiederholt wird, bis die modifizierte vorläufige Handlungsanweisung außerhalb der Menge der unzulässigen Handlungsanweisungen oder (alternativ oder zusätzlich) innerhalb der Menge der zulässigen Handlungsanweisungen liegt. Vorteilhaft lässt die Sicherheitseinheit eine Weiterleitung der modifizierten Handlungsanweisung an das Aktorensystem dann zu. Insbesondere durch die Nichtberücksichtigung der zeitlich letzten Teilanweisung bei der Erstellung der modifizierten vorläufigen Handlungsanweisung kann beispielsweise vermieden werden, dass der Betrieb des Arbeitsgeräts unnötig unterbrochen wird. Die vorläufige Handlungsanweisung setzt sich dann aus den zeitlich vor der letzten Teilanweisung liegenden Teilanweisungen zusammen oder entspricht der zeitlich ersten Teilanweisung.

Beispielsweise kann die Teilanweisung lediglich einen von mehreren Aktoren betreffen. Soll durch eine zeitlich spätere Teilanweisung ein anderer Aktor in Betrieb genommen werden und entstünde hierdurch ein unzulässiger Betriebszustand, wird dies durch den beschriebenen Prozess vermieden. Dennoch ist ein ununterbrochender Weiterbetrieb des zuerst in Betrieb genommenen Aktors möglich. Insbesondere können die Teilanweisungen von den jeweiligen Bedienvorrichtungen zu unterschiedlichen Zeitpunkten an die Anweisungseinheit übermittelt werden. Zweckmäßig wird bei Ankunft einer neuen Teilanweisung immer wieder eine neue vorläufige Handlungsanweisung von der Anweisungseinheit erstellt. Diese vorläufige Handlungsanweisung wird vorteilhaft dann von der Sicherheitseinheit überprüft.

Insbesondere umfasst das Aktorensystem mehrere Aktoren. Vorteilhaft gibt die Steuereinheit die Handlungsanweisung für die mehreren Aktoren aus. Insbesondere kann es bei einem solchen Aktorensystem, das mehrere Aktoren umfasst, zu unzulässigen Handlungsanweisungen kommen. Durch die Sicherheitseinheit ist sichergestellt, dass diese unzulässigen Handlungsanweisungen nicht zum Aktorensystem gelangen. Dadurch ist das Arbeitsgerät sicher und dennoch flexibel an die jeweiligen Einsatzbedingungen anpassbar.

Zweckmäßig sind die Anweisungseinheit, die Sicherheitseinheit und/oder das Aktorensystem zur Übertragung von Daten, insbesondere zur Übertragung der Handlungsanweisung, mittels eines Feldbusses, insbesondere mittels eines CAN (Controller Area Network)-Busses, miteinander verbunden. Dadurch ist eine sichere und zuverlässige Kommunikation zwischen den genannten Komponenten möglich.

Vorteilhaft ist die Sicherheitseinheit so ausgelegt, dass sie eine Handlungsanweisung, die die Norm ISO 13849 nicht erfüllt, der Menge der unzulässigen Handlungsanweisungen zuordnet. Insbesondere ordnet die Sicherheitseinheit eine Handlungsanweisung, die die Norm ISO 13849 erfüllt, der Menge der zulässigen Handlungsanweisungen zu.

Alternativ oder zusätzlich ist die Sicherheitseinheit so ausgelegt, dass sie eine Handlungsanweisung, die die Norm ISO 13849 erfüllt, der Menge der zulässigen Handlungsanweisungen zuordnet.

In besonderer Ausgestaltung der Erfindung umfasst das Aktorensystem eine Seilwinde, einen Motor zum Verschwenken eines Auslegers eines Krans, einen Hydraulikzylinder und/oder Motor zum Antrieb eines Rads zur Fortbewegung, insbesondere des Arbeitsgeräts. Eine unzulässige Handlungsanweisung kann dann beispielsweise im gleichzeitigen Betrieb des Motors zum Verschwenken des Auslegers des Krans und des Motors zum Antrieb des Rads zur Fortbewegung liegen. Eine unzulässige Handlungsanweisung kann auch darin zu sehen sein, dass die Seilwinde und der Motor zum Verschwenken des Auslegers des Krans gleichzeitig betrieben werden.

Insbesondere ist das Arbeitsgerät ein Kran. Bei einem Kran ist eine Steuereinheit, die eine Anweisungseinheit und eine Sicherheitseinheit umfasst, besonders vorteilhaft. Bei einem Betrieb eines Krans kann es zu zahlreichen unzulässigen Handlungsanweisungen und/oder Betriebszuständen kommen.

In vorteilhafter Weiterbildung der Erfindung ist das Arbeitsgerät Bestandteil einer Anordnung, die zusätzlich zum Arbeitsgerät mindestens eine Bedienvorrichtung umfasst. Zweckmäßig ist zwischen der Steuereinheit und der mindestens einen Bedienvorrichtung ein erster Datenkanal zur Übertragung von digitalen Daten ausgebildet. Vorteilhaft ist der erste Datenkanal ein Feldbus, insbesondere ein CAN (Controller Area Network)-Bus.

Der CAN-Bus ist insbesondere ein serielles Bussystem. Der CAN-Bus ermöglicht den Austausch von Informationen. Technisch ausgedrückt wird das Controller Area Network durch eine Datenverbindungsschicht und eine physikalische Schicht beschrieben. Die physikalische Schicht des CAN-Busses definiert Komponenten wie Kabeltypen und deren Impedanz, elektrische Signalpegel und Knotenanforderungen.

Für ein Hochgeschwindigkeits-CAN-Netzwerk beschreibt die Norm ISO 11898-1 die Datenverbindungsschicht. Die Norm 11898-2 beschreibt die physikalische Schicht. Insbesondere sind die CAN-Knoten über einen Zweidrahtbus mit einer Datenübertragungsrate von bis zu 1 Mbit/s, insbesondere von bis zu 5 Mbit/s verbunden. Insbesondere ist der CAN-Bus ordnungsgemäß abgeschlossen, insbesondere mit einem 120 Ohm CAN-Busabschlusswiderstand an jedem Ende des Busses. Der CAN-Bus ermöglicht es, den verschiedenen Komponenten der Anordnung, insbesondere der Steuereinheit und der mindestens einen Bedienvorrichtung, und insbesondere dem Aktorensystem, miteinander ohne komplexe Spezialverkabelung zu kommunizieren. Über den ersten Datenkanal ist insbesondere eine funktional sichere Kommunikation zwischen der Steuereinheit und der mindestens einen Bedienvorrichtung möglich.

Vorteilhaft ist zwischen der Steuereinheit und der mindestens einen Bedienvorrichtung ein zweiter Datenkanal zur Übertragung von digitalen Daten ausgebildet. Der zweite Datenkanal dient insbesondere zur Übertragung von Daten mit einer höheren Datenübertragungsrate als es mit dem ersten Datenkanal möglich ist. Über den zweiten Datenkanal können insbesondere Daten übertragen werden, die nicht sicherheitsrelevant sind. Über den ersten Datenkanal ist insbesondere eine Echtzeitkommunikation zwischen der mindestens einen Bedienvorrichtung und der Steuereinheit möglich. Dadurch, dass sowohl ein erster Datenkanal zur Übertragung von sicherheitsrelevanten Daten als auch ein zweiter Datenkanal zur Übertragung von nicht sicherheitsrelevanten Daten zur Verfügung steht, ist zugleich eine sichere und schnelle Kommunikation möglich.

In vorteilhafter Weiterbildung der Erfindung ist vorgesehen, dass die Anordnung so ausgelegt ist, dass über den zweiten Datenkanal mittels des Black-Channel-Prinzips Daten übertragbar sind.

Das Black-Channel-Prinzip wird in sicherheitsgerichteten Systemen verwendet, bei denen Kommunikationskomponenten verwendet werden, die die Anforderungen an die sichere Datenübertragung nicht erfüllen. Hierbei wird insbesondere zwischen der Sicherheitsanwendung und dem unsicheren Standardkommunikationskanal ein Sicherheitsprotokoll integriert, welches dem Sicherheitsniveau des sicherheitsgerichteten Systems entspricht und Übertragungsfehler der darunter liegenden Kommunikationsschichten erkennt und beherrscht. Das heißt, der nicht sichere Übertragungskanal wird durch ein übergeordnetes sicheres Protokoll laufend auf seine Integrität überwacht.

Insbesondere wird zumindest ein Abschnitt des zweiten Datenkanals als Black Channel bezeichnet. Insbesondere wird für den zweiten Datenkanal als Kommunikationsverfahren Ethernet verwendet. Zweckmäßig ist zumindest ein Abschnitt des zweiten Datenkanals durch ein Ethernet-Kabel gebildet. Insbesondere bildet das Ethernet-Kabel einen Black Channel aus.

Durch die Anwendung des Black-Channel-Prinzips können auch über den zweiten Datenkanal sicherheitsrelevante Daten, insbesondere Daten zur Erstellung einer sicherheitsrelevanten Handlungsanweisung in der Steuereinheit, insbesondere eine sicherheitsrelevante Handlungsanweisung, übertragen werden. Sicherheitsrelevante Daten sind insbesondere Daten, die im Zusammenhang mit einer bewegungsauslösenden Handlungsanweisung oder einer ein Not-Aus bewirkenden Handlungsanweisung stehen. Eine bewegungsauslösende Handlungsanweisung bewirkt eine Bewegung des Arbeitsgeräts oder einer Komponente des Arbeitsgeräts.

Insbesondere umfasst der zweite Datenkanal eine erste Sende- und Empfangsstelle auf Seiten der mindestens einen Bedienvorrichtung. Zweckmäßig umfasst der zweite Datenkanal eine zweite Sende- und Empfangsstelle auf Seiten der Steuereinheit. Zweckmäßig sind sowohl die erste als auch die zweite Sende- und Empfangsstelle durch einen Feldbus, insbesondere einen CAN (Controller Area Network)-Bus, ausgebildet. Dadurch ist in dem zweiten Datenkanal ein Sicherheitsprotokoll integriert, welches Übertragungsfehler der darunter liegenden Kommunikationsschichten erkennt und beherrscht. Das Sicherheitsprotokoll ist insbesondere ein sicherheitsgerichtetes Feldbusprotokoll, das die Norm IEC 61158 (Basiskommunikation), IEC 61784-2 (Echtzeitkommunikation) und/oder IEC 61784-3-18 (Sicherheitsprofil) erfüllt. Durch diese Gestaltung des zweiten Datenkanals kann ein Abschnitt des zweiten Datenkanals Ethernet als Kommunikationsverfahren nutzen. Dadurch ist zugleich eine schnelle und sichere Datenübertragung möglich. Die Übertragung sicherer Informationen kann über das gleiche Ethernet-Netzwerk erfolgen, über das auch bandbreitenintensive Informationen übertragen werden. Bei einer solchen Ausgestaltung des zweiten Datenkanals kann auch auf den ersten Datenkanal verzichtet werden.

In vorteilhafter Weiterbildung der Erfindung kann die Energieversorgung der mindestens einen Bedienvorrichtung über den zweiten Datenkanal, insbesondere über das Ethernet-Kabel erfolgen. Dadurch ist auf einfache Weise die Energieversorgung der Bedienvorrichtung möglich.

Es kann auch vorgesehen sein, dass zumindest ein Abschnitt des zweiten Datenkanals durch eine drahtlose Verbindung, insbesondere durch eine WLAN (Wireless Local Area Network)-Verbindung oder eine Bluetooth-Verbindung gebildet ist. Dadurch ist auf einfache Weise eine bandbreitenintensive Übertragung von Informationen möglich.

Ein Ausführungsbeispiel der Erfindung wird im Folgenden anhand der Zeichnung erläutert. Es zeigt:

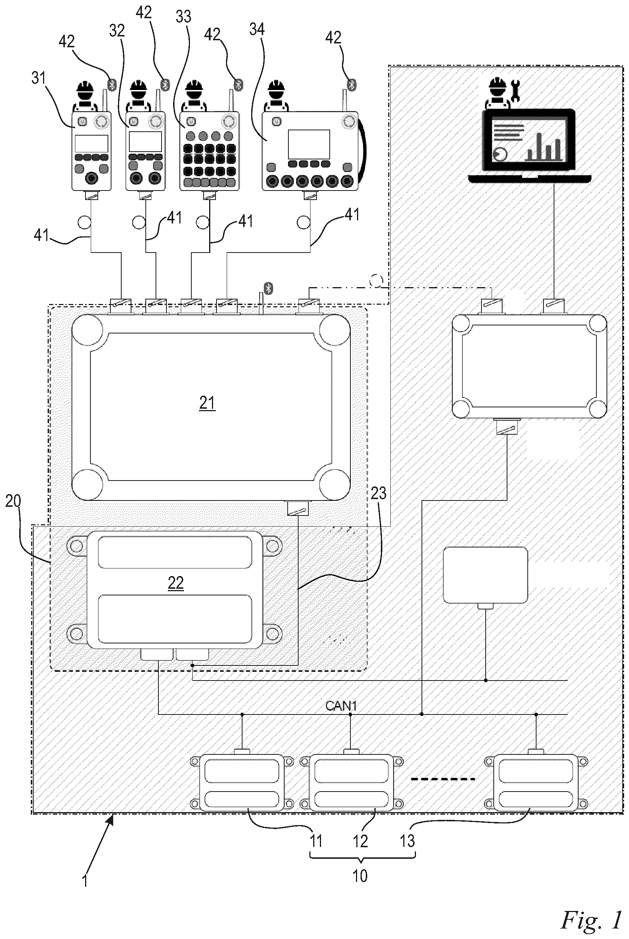

- Fig. 1: eine schematische Darstellung einer Anordnung umfassend ein erfindungsgemäßes Arbeitsgerät und mindestens eine Bedienvorrichtung.

Fig. 1 zeigt ein Arbeitsgerät 1. Das Arbeitsgerät 1 ist Teil einer Anordnung, die das Arbeitsgerät 1 und mindestens eine Bedienvorrichtung 31, 32, 33, 34 umfasst. Das Arbeitsgerät 1 ist ein elektrisches Arbeitsgerät. Die Anordnung ist im Ausführungsbeispiel eine bewegliche Anordnung. Insbesondere ist die Anordnung verfahrbar. Insbesondere besitzt das Arbeitsgerät mindestens eine bewegliche Komponente. Im Ausführungsbeispiel ist die Anordnung ein Kran. Es kann sich bei der Anordnung aber auch um eine Seilwinde oder um ein Fahrzeug mit einer Seilwinde handeln.

Das Arbeitsgerät 1 umfasst im Ausführungsbeispiel sämtliche Bestandteile des Krans bis auf die mindestens eine Bedienvorrichtung 31, 32, 33, 34 und die entsprechende Anbindung zur Übertragung von Daten zwischen der mindestens einen Bedienvorrichtung 31, 32, 33, 34 und dem Arbeitsgerät 1.

Das Arbeitsgerät 1 umfasst ein Aktorensystem 10. Das Aktorensystem 10 umfasst mindestens einen Aktor 11, 12, 13. Im Ausführungsbeispiel nach Fig. 1 umfasst das Aktorensystem 10 den ersten Aktor 11, den zweiten Aktor 12 und den dritten Aktor 13. Das Aktorensystem 10 kann eine Seilwinde, einen Motor zum Verschwenken eines Auslegers des Krans, einen Hydraulikzylinder und/oder einen Motor zum Antrieb eines Rads zur Fortbewegung, insbesondere zum Antrieb eines Rads zur Fortbewegung des Krans, insbesondere zum Antrieb eines Rads zur Fortbewegung des Fahrzeugs, umfassen. Im Ausführungsbeispiel ist der erste Aktor 11 eine Seilwinde. Im Ausführungsbeispiel ist der zweite Aktor 12 ein Motor zum Verschwenken eines Auslegers des Krans. Der Ausleger ist eine bewegliche Komponente des Arbeitsgeräts 1. Im Ausführungsbeispiel ist der dritte Aktor 13 ein Rad zur Fortbewegung des Krans. Der Kran ist beweglich. Der Kran ist verfahrbar.

Das Arbeitsgerät 1 umfasst eine Steuereinheit 20. Die Steuereinheit 20 dient zur Steuerung des Aktorensystems 10. Insbesondere dient die Steuereinheit 20 zur Steuerung des ersten Aktors 11, insbesondere zur Steuerung des zweiten Aktors 12 und/oder insbesondere zur Steuerung des dritten Aktors 13. Das Arbeitsgerät 1 ist so ausgelegt, dass die Steuereinheit 20 zur Steuerung des Aktorensystems 10 eine Handlungsanweisung für das Aktorensystem 10 ausgibt. Zur elektronischen Übermittlung der Handlungsanweisung weist das Arbeitsgerät 1 einen Anweisungskanal CAN1 auf. Der Anweisungskanal CAN1 dient zur Übermittlung von Daten. Im Ausführungsbeispiel ist der Anweisungskanal CAN1 ein Feldbus, insbesondere ein CAN (Controller Area Network)-Bus.

Der Anweisungskanal CAN1 genügt den in der Beschreibungseinleitung im Zusammenhang mit dem CAN-Bus genannten Kriterien.

Die Ausgabe einer Handlungsanweisung für das Aktorensystem 10 durch die Steuereinheit 20 entspricht der Übermittlung eines Steuersignals 20 von der Steuereinheit 20 an das Aktorensystem 10. Bei dem Steuersignal handelt es sich im Ausführungsbeispiel um ein elektrisches Signal. Die Ausgabe der Handlungsanweisung für das Aktorensystem 10 bewirkt, dass das Aktorensystem 10, insbesondere der mindestens eine Aktor 11, 12, 13, in einen der Handlungsanweisung entsprechenden Betriebszustand versetzt wird. Das Arbeitsgerät 1 ist so ausgelegt, dass die von der Steuereinheit 20 ausgegebene Handlungsanweisung von dem Aktorensystem 10, insbesondere von dem mindestens einen Aktor 11, 12, 13 umgesetzt wird.

Die Handlungsanweisung kann beispielsweise darin bestehen, dass ein Motor des als Seilwinde ausgebildeten ersten Aktors 11 eingeschaltet oder ausgeschaltet werden soll. In analoger Weise kann eine Handlungsanweisung für das Aktorensystem 10 vorsehen, dass der als Motor zur Verschwenkung des Auslegers des Krans ausgebildete zweite Aktor eingeschaltet oder ausgeschaltet werden soll. In analoger Weise kann die Ausgabe der Handlungsanweisung für das Aktorensystem 10 durch die Steuereinheit 20 bewirken, dass der als Motor für ein Rad ausgebildete dritte Aktor ein- oder ausgeschaltet wird. Insbesondere ist die Handlungsanweisung ein Steuersignal, das von der Steuereinheit 20 an das Aktorensystem 20 gesendet wird. Insbesondere wirkt die Handlungsanweisung auf das Aktorensystem 10 so ein, dass das Aktorensystem 10 in einen Betriebszustand gemäß der Handlungsanweisung versetzt wird.

Die Steuereinheit 20 umfasst eine Anweisungseinheit 21 und eine Sicherheitseinheit 22. Die Sicherheitseinheit 22 ist funktional zwischen der Anweisungseinheit 21 und dem Aktorensystem 10 angeordnet. Die Anweisungseinheit 21 dient zur Erstellung einer vorläufigen Handlungsanweisung für das Aktorensystem 10. In der Sicherheitseinheit 22 ist eine Menge an unzulässigen Handlungsanweisungen definiert. Die Menge an unzulässigen Handlungsanweisungen kann durch bestimmte Rahmenbedingungen festgelegt sein. Beispielsweise kann in der Sicherheitseinheit 22 hinterlegt sein, dass der mindestens eine Aktor 11, 12, 13 des Aktorensystems 10 nur innerhalb bestimmter Grenzwerte betrieben werden darf. Es kann aber auch hinterlegt sein, dass einer der mehreren Aktoren 11, 12, 13 nicht gleichzeitig mit einem anderen der mehreren Aktoren 11, 12, 13 betrieben werden darf. Es kann auch vorgesehen sein, dass alternativ oder zusätzlich zur Definierung der Menge an unzulässigen Handlungsanweisungen in der Sicherheitseinheit 22 eine Menge an zulässigen Handlungsanweisungen in der Sicherheitseinheit 22 definiert ist.

Die Steuereinheit 20 ist so ausgelegt, dass die Sicherheitseinheit 22 überprüft, ob die von der Anweisungseinheit 21 erstellte vorläufige Handlungsanweisung in der Menge der unzulässigen Handlungsanweisungen liegt. Alternativ oder zusätzlich kann vorgesehen sein, dass die Sicherheitseinheit 22 überprüft, ob die von der Anweisungseinheit 21 erstellte vorläufige Handlungsanweisung außerhalb der Menge der zulässigen Handlungsanweisungen liegt.

Im Ausführungsbeispiel ist die Anweisungseinheit 21 in einem Anweisungsgehäuse angeordnet. Die Sicherheitseinheit 22 ist in einem Sicherheitsgehäuse angeordnet. Sowohl das Anweisungsgehäuse als auch das Sicherheitsgehäuse sind in einem gemeinsamen Steuergehäuse angeordnet.

Die Anweisungseinheit 21 ist mittels einer Datenleitung 23 mit der Sicherheitseinheit 22 verbunden, insbesondere elektrisch verbunden. Die Datenleitung 23 dient zum Austausch von digitalen Daten zwischen der Anweisungseinheit 21 und der Sicherheitseinheit 22. Die vorläufige Handlungsanweisung wird über die Datenleitung 23 von der Anweisungseinheit 21 zu der Sicherheitseinheit 22 übermittelt. Im Ausführungsbeispiel ist der die Datenleitung 23 ein Feldbus, insbesondere ein CAN (Controller Area Network)-Bus. Die Datenleitung 23 genügt den in der Beschreibungseinleitung im Zusammenhang mit dem CAN-Bus genannten Kriterien.

Die Sicherheitseinheit 22 lässt die Weiterleitung der vorläufigen Handlungsanweisung an das Aktorensystem 10 nur dann in unveränderter Form zu, wenn die vorläufige Handlungsanweisung außerhalb der Menge der unzulässigen Handlungsanweisungen liegt. Andernfalls verhindert die Sicherheitseinheit 22 die Weiterleitung der vorläufigen Handlungsanweisung an das Aktorensystem 10 oder die Sicherheitseinheit 22 verändert die vorläufige Handlungsanweisung so, dass sie außerhalb der Menge der unzulässigen Handlungsanweisungen liegt und leitet die Handlungsanweisung dann an das Aktorensystem 10 weiter. Alternativ oder zusätzlich kann vorgesehen sein, dass die Sicherheitseinheit 22 die Weiterleitung der vorläufigen Handlungsanweisung an das Aktorensystem 10 nur dann in unveränderter Form zulässt, wenn die vorläufige Handlungsanweisung innerhalb der Menge der zulässigen Handlungsanweisungen liegt. Andernfalls verhindert die Sicherheitseinheit 22 die Weiterleitung der vorläufigen Handlungsanweisung an das Aktorensystem 10 oder die Sicherheitseinheit 22 verändert die vorläufige Handlungsanweisung so, dass sie innerhalb der Menge der zulässigen Handlungsanweisungen liegt und leitet die Handlungsanweisung dann an das Aktorensystem 10 weiter.

Die Steuereinheit 20, insbesondere die Anweisungseinheit 21, ist zur Kopplung mit der mindestens einen Bedienvorrichtung 31, 32, 33, 34 ausgelegt. Mittels der mindestens einen Bedienvorrichtung 31, 32, 33, 34 kann der Bediener vorgeben, welche vorläufige Handlungsanweisung die Anweisungseinheit 21 erstellt. Im Ausführungsbeispiel dient die mindestens eine Bedienvorrichtung 31, 32, 33, 34 zur Bedienung des Aktorensystems 10, insbesondere zur Bedienung des mindestens einen Aktors 11, 12, 13.

Zur Kopplung der mindestens einen Bedienvorrichtung 31, 32, 33, 34 mit der Steuereinheit 20, insbesondere mit der Anweisungseinheit 21, umfasst die Anordnung einen ersten Datenkanal 41. Der erste Datenkanal 41 dient zur Übertragung von Daten zwischen der mindestens einen Bedienvorrichtung 31, 32, 33, 34 und der Steuereinheit 20, insbesondere der Anweisungseinheit 21. Im Ausführungsbeispiel ist der erste Datenkanal 41 ein Kabel. Der erste Datenkanal 41 ist im Ausführungsbeispiel ein Feldbus, insbesondere ein CAN (Controller Area Network)-Bus.

Das Arbeitsgerät 1 ist so ausgelegt, dass die Steuereinheit 20, insbesondere die Sicherheitseinheit 22, bei der Kopplung der mindestens einen Bedienvorrichtung 31, 32, 33, 34 mit der Steuereinheit 20 eine Bedienoberfläche, insbesondere eine Menüstruktur, an die mindestens eine Bedienvorrichtung 31, 32, 33, 34 übergibt. Im Ausführungsbeispiel geschieht dies durch eine Übertragung von Daten mittels des ersten Datenkanals 41. Es kann aber auch vorgesehen sein, dass die Datenübertragung mittels eines zweiten Datenkanals 42 erfolgt. Der zweite Datenkanal 42 wird nachfolgend an anderer Stelle ausführlich beschrieben.

Wie Fig. 1 zu entnehmen, umfasst die Anordnung mehrere Bedienvorrichtungen 31, 32, 33, 34. Die Anordnung umfasst eine erste Bedienvorrichtung 31, eine zweite Bedienvorrichtung 32, eine dritte Bedienvorrichtung 33 und eine vierte Bedienvorrichtung 34. Die mehreren Bedienvorrichtungen 31, 32, 33, 34 sind mit der Steuereinheit 20 koppelbar. Mittels der mehreren Bedienvorrichtungen 31, 32, 33, 34 kann ein Bediener vorgeben, welche vorläufige Handlungsanweisung die Anweisungseinheit 21 erstellt. Es kann vorgesehen sein, dass jede Bedienvorrichtung 31, 32, 33, 34 genau einem Aktor 11, 12, 13 des Aktorensystems 10 zugeordnet ist. Es kann aber auch vorgesehen sein, dass mittels einer der mehreren Bedienvorrichtungen 31, 32, 33, 34 zwei verschiedene Aktoren 11, 12, 13 bedienbar sind.

Im Ausführungsbeispiel kann die vorläufige Handlungsanweisung, die von der Anweisungseinheit 21 erstellt wird, aus mehreren Teilanweisungen zusammengesetzt sein. Jeder Bedienvorrichtung 31, 32, 33, 34 ist jeweils eine Teilanweisung zugeordnet. Die Teilanweisung ist von der Bedienvorrichtung 31, 32, 33, 34 an die Anweisungseinheit 21 übermittelbar. Die Anweisungseinheit 21 erstellt aus den Teilanweisungen die vorläufige Handlungsanweisung. Die Sicherheitseinheit 22 überprüft, ob die aus den Teilanweisungen erstellte vorläufige Handlungsanweisung in der Menge der unzulässigen Handlungsanweisungen liegt. Alternativ oder zusätzlich überprüft die Sicherheitseinheit 22, ob die aus den Teilanweisungen erstellte vorläufige Handlungsanweisung außerhalb der Menge der zulässigen Handlungsanweisungen liegt. Wenn die vorläufige Handlungsanweisung innerhalb der Menge der unzulässigen Handlungsanweisungen oder (alternativ oder zusätzlich) außerhalb der Menge der zulässigen Handlungsanweisungen liegt, verändert die Sicherheitseinheit 22 die vorläufige Handlungsanweisung so, als wäre die zeitlich letzte Teilanweisung nicht zur Erstellung der vorläufigen Handlungsanweisung berücksichtigt worden. Wird also zunächst von der ersten Bedienvorrichtung 31 eine erste Teilanweisung an die Anweisungseinheit 21 übersendet und dann zu einem späteren Zeitpunkt eine zweite Teilanweisung von der zweiten Bedienvorrichtung 32 an die Anweisungseinheit 21 gesendet, und erstellt die Anweisungseinheit 21 hieraus eine vorläufige Handlungsanweisung, die innerhalb der Menge der unzulässigen Handlungsanweisungen und/oder außerhalb der Menge der zulässigen Handlungsanweisungen liegt, verändert die Sicherheitseinheit 22 die vorläufige Handlungsanweisung so, als ob sie ausschließlich basierend auf der ersten Teilanweisung der Anweisungseinheit 21 erstellt worden wäre. Dieser Prozess wird solange wiederholt, bis die modifizierte vorläufige Handlungsanweisung außerhalb der Menge der unzulässigen Handlungsanweisungen und/oder innerhalb der Menge der zulässigen Handlungsanweisungen liegt oder die modifizierte vorläufige Handlungsanweisung ausschließlich auf eine einzige Teilanweisung zurückgeht und immer noch innerhalb der Menge der unzulässigen Handlungsanweisungen und/oder außerhalb der Menge der zulässigen Handlungsanweisungen liegt. Nur wenn bei diesem Prozess eine modifizierte vorläufige Handlungsanweisung von der Sicherheitseinheit 22 erstellt wird, die außerhalb der Menge der unzulässigen Handlungsanweisungen und/oder innerhalb der Menge der zulässigen Handlungsanweisungen liegt, lässt die Sicherheitseinheit 22 eine Weiterleitung der modifizierten Handlungsanweisung an das Aktorensystem 10 zu. Es kann auch vorgesehen sein, dass die erste und die zweite Teilanweisung von derselben Bedienvorrichtung 31, 32, 33, 34 stammen und lediglich zeitlich versetzt vom Bediener generiert werden.

Wie in Fig. 1 dargestellt, umfasst das Aktorensystem 10 mehrere Aktoren 11, 12, 13. Die Steuereinheit 20 gibt die Handlungsanweisung für die mehreren Aktoren 11, 12, 13 aus. Eine einzige Handlungsanweisung kann demnach mehrere verschiedene Aktoren 11, 12, 13 ansprechen.

Die Steuereinheit 20, insbesondere die Sicherheitseinheit 22 ist so ausgelegt, dass sie eine Handlungsanweisung, die die Norm ISO 13849 nicht erfüllt, der Menge der unzulässigen Handlungsanweisungen zuordnet. Alternativ oder zusätzlich ist die Steuereinheit 20, insbesondere die Sicherheitseinheit 22 ist so ausgelegt, dass sie eine Handlungsanweisung, die die Norm ISO 13849 erfüllt, der Menge der zulässigen Handlungsanweisungen zuordnet.

Der zweite Datenkanal 42 ist zwischen der Steuereinheit 20 und der mindestens einen Bedienvorrichtung 31, 32, 33, 34 zur Übertragung von digitalen Daten ausgebildet. Demnach können Daten zwischen der Steuereinheit 20 und der mindestens einen Bedienvorrichtung 31, 32, 33, 34 über den ersten Datenkanal 41, über den zweiten Datenkanal 42 oder über den ersten Datenkanal 41 und den zweiten Datenkanal 42 gemeinsam ausgetauscht werden. Im Ausführungsbeispiel ist der erste Datenkanal 41 ein CAN-Bus. Die Datenübermittlung ist im Ausführungsbeispiel sicherer über den ersten Datenkanal 41 als über den zweiten Datenkanal 42 möglich. Die maximale Datenübertragungsrate des zweiten Datenkanals 42 ist größer als die des ersten Datenkanals 41. Sicherheitsrelevante Daten können zuverlässig über den ersten Datenkanal 41 übertragen werden. Gleichzeitig ist die Übertragung von Daten mit gro-ßem Datenvolumen über den zweiten Datenkanal 42 möglich. Über den zweiten Datenkanal 42 können insbesondere Daten, die keine Auswirkung für die Sicherheit der Anordnung, insbesondere des Arbeitsgeräts 1 haben, übertragen werden. Die maximale Datenübertragungsrate des ersten Datenkanals 41 beträgt 5 Mbit/s, insbesondere 1 Mbit/s. Die maximale Datenübertragungsrate des zweiten Datenkanals 42 beträgt 400 Gbit/s, insbesondere 200 Gbit/s, insbesondere 100 Gbit/s, insbesondere 50 Gbit/s, insbesondere 40 Gbit/s, insbesondere 10 Gbit/s, insbesondere 5 Gbit/s, insbesondere 2,5 Gbit/s. Im Ausführungsbeispiel ist der erste Datenkanal 41 ein Feldbus, insbesondere ein CAN-Bus. Im Ausführungsbeispiel ist zumindest ein Abschnitt des zweiten Datenkanals 42 durch ein Ethernet-Netzwerk, insbesondere durch eine drahtlose Verbindung gebildet. Im Ausführungsbeispiel ist die drahtlose Verbindung durch eine Bluetooth-Verbindung gebildet. Es kann aber auch vorgesehen sein, dass die drahtlose Verbindung durch eine WLAN (Wireless Local Area Network)-Verbindung gebildet ist. Die WLAN-Verbindung erfüllt die Kriterien der Normenfamilie IEEE 802.11. In alternativer Ausgestaltung kann vorgesehen sein, dass zumindest ein Abschnitt des zweiten Datenkanals durch ein Ethernet-Kabel gebildet ist. Es kann aber auch vorgesehen sein, dass ein Abschnitt des zweiten Datenkanals durch ein Ethernet-Kabel gebildet und dass ein weiterer Abschnitt des zweiten Datenkanals durch eine der beschriebenen drahtlosen Verbindungen gebildet ist. Das Ethernet-Netzwerk ist gemäß der Norm IEEE 802.3 ausgebildet.

Im Ausführungsbeispiel ist die Anordnung so ausgelegt, dass über den zweiten Datenkanal 42 mittels des Black Channel-Prinzips Daten übertragbar sind. Zumindest ein Abschnitt des zweiten Datenkanals 42 bildet einen Black Channel. Der zweite Datenkanal 42 umfasst eine erste Sende- und Empfangsstelle auf Seiten der mindestens einen Bedienvorrichtung 31, 32, 33, 34. Der zweite Datenkanal 42 umfasst eine zweite Sende- und Empfangsstelle auf Seiten der Steuereinheit 20. Sowohl die erste als auch die zweite Sende- und Empfangsstelle sind durch einen Feldbus, insbesondere einen CAN-Bus ausgebildet.

Es kann vorgesehen sein, dass die Energieversorgung der mindestens einen Bedienvorrichtung 31, 32, 33, 34 über den zweiten Datenkanal 42, insbesondere über das Ethernet-Kabel, erfolgt. Ebenso kann vorgesehen sein, dass kein erster Datenkanal 41 vorgesehen ist. Der Datenaustausch zwischen der mindestens einen Bedienvorrichtung 31, 32, 33, 34 erfolgt dann ausschließlich über den zweiten Datenkanal 42.

Im Ausführungsbeispiel ist jeder Bedienvorrichtung 31, 32, 33, 34 ein erster Datenkanal 41 und ein zweiter Datenkanal 42 zugeordnet.

## Patentansprüche

1. Arbeitsgerät umfassend:
- ein Aktorensystem (10) mit mindestens einem Aktor (11, 12, 13) und
- eine Steuereinheit (20) zur Steuerung des Aktorensystems (10),
wobei die Steuereinheit (20) zur Steuerung des Aktorensystems (10) eine Handlungsanweisung für das Aktorensystem (10) ausgibt,
**dadurch gekennzeichnet, dass** die Steuereinheit (20) eine Anweisungseinheit (21) und eine Sicherheitseinheit (22) umfasst, dass die Sicherheitseinheit (22) funktional zwischen der Anweisungseinheit (21) und dem Aktorensystem (10) angeordnet ist, dass die Anweisungseinheit (21) eine vorläufige Handlungsanweisung für das Aktorensystem (10) erstellt, dass in der Sicherheitseinheit (22) eine Menge an unzulässigen Handlungsanweisungen und/oder an zulässigen Handlungsanweisungen definiert ist, dass die Sicherheitseinheit (22) überprüft,
- ob die vorläufige Handlungsanweisung in der Menge der unzulässigen Handlungsanweisungen liegt und die Weiterleitung der vorläufigen Handlungsanweisung an das Aktorensystem (10) nur dann in unveränderter Form zulässt, wenn die vorläufige Handlungsanweisung außerhalb der Menge der unzulässigen Handlungsanweisungen liegt
und/oder
- ob die vorläufige Handlungsanweisung in der Menge der zulässigen Handlungsanweisungen liegt und die Weiterleitung der vorläufigen Handlungsanweisung an das Aktorensystem (10) nur dann in unveränderter Form zulässt, wenn die vorläufige Handlungsanweisung innerhalb der Menge der zulässigen Handlungsanweisungen liegt.

2. Arbeitsgerät nach Anspruch 1,
**dadurch gekennzeichnet, dass** die Steuereinheit (20), insbesondere die Anweisungseinheit (21), zur Kopplung mit mindestens einer Bedienvorrichtung (31, 32, 33, 34) ausgelegt ist, und dass ein Bediener mittels der mindestens einen Bedienvorrichtung (31, 32, 33, 34) vorgeben kann, welche vorläufige Handlungsanweisung die Anweisungseinheit (21) erstellt.

3. Arbeitsgerät nach Anspruch 2,
**dadurch gekennzeichnet, dass** die Steuereinheit (20), insbesondere die Sicherheitseinheit (22), bei der Kopplung der mindestens einen Bedienvorrichtung (31, 32, 33, 34) an die Steureinheit (20) eine Bedienoberfläche, insbesondere eine Menüstruktur, an die mindestens eine Bedienvorrichtung (31, 32, 33, 34) übergibt.

4. Arbeitsgerät nach Anspruch 2 oder 3,
**dadurch gekennzeichnet, dass** mehrere Bedienvorrichtungen (31, 32, 33, 34) mit der Steuereinheit (20) koppelbar sind, und dass ein Bediener mittels der mehreren Bedienvorrichtungen (31, 32, 33, 34) vorgeben kann, welche vorläufige Handlungsanweisung die Anweisungseinheit (21) erstellt.

5. Arbeitsgerät nach Anspruch 4,
**dadurch gekennzeichnet, dass** jeder Bedienvorrichtung (31, 32, 33, 34) eine Teilanweisung zugeordnet ist, die von der Bedienvorrichtung (31, 32, 33, 34) an die Anweisungseinheit (21) übermittelbar ist, dass die Anweisungseinheit (21) aus den Teilanweisungen die vorläufige Handlungsanweisung erstellt, dass die Sicherheitseinheit (22) die vorläufige Handlungsanweisung, wenn sie innerhalb der Menge der unzulässigen Handlungsanweisungen oder außerhalb der Menge der zulässigen Handlungsanweisungen liegt, so verändert, als wäre die zeitliche letzte Teilanweisung nicht zur Erstellung der vorläufigen Handlungsanweisung berücksichtigt worden, und dass dieser Prozess so lange wiederholt wird, bis die modifizierte vorläufige Handlungsanweisung außerhalb der Menge der unzulässigen Handlungsanweisungen oder innerhalb der Menge der zulässigen Handlungsanweisungen liegt und die Sicherheitseinheit (22) eine Weiterleitung der modifizierten Handlungsanweisung an das Aktorensystem (10) zulässt.

6. Arbeitsgerät nach einem der Ansprüche 1 bis 5,
**dadurch gekennzeichnet, dass** das Aktorensystem (10) mehrere Aktoren (11, 12, 13) umfasst, und dass die Steuereinheit (20) die Handlungsanweisung für die mehreren Aktoren (11, 12, 13) ausgibt.

7. Arbeitsgerät nach einem der Ansprüche 1 bis 6,
**dadurch gekennzeichnet, dass** die Sicherheitseinheit (22) so ausgelegt ist,
- dass sie eine Handlungsanweisung, die die Norm ISO 13849 nicht erfüllt, der Menge der unzulässigen Handlungsanweisungen zuordnet und/oder
- dass sie eine Handlungsanweisung, die die Norm ISO 13849 erfüllt, der Menge der zulässigen Handlungsanweisungen zuordnet.

8. Arbeitsgerät nach einem der Ansprüche 1 bis 7,
**dadurch gekennzeichnet, dass** das Aktorensystem (10) eine Seilwinde, einen Motor zum Verschwenken eines Auslegers eines Krans, einen Hydraulikzylinder und/oder einen Motor zum Antrieb eines Rads zur Fortbewegung umfasst.

9. Anordnung umfassend mindestens eine Bedienvorrichtung (31, 32, 33, 34) und ein Arbeitsgerät (1) nach einem der Ansprüche 1 bis 9,
**dadurch gekennzeichnet, dass** zwischen der Steuereinheit (20) und der mindestens einen Bedienvorrichtung (31, 32, 33, 34) ein erster Datenkanal (41) zur Übertragung von digitalen Daten ausgebildet ist, und dass der erste Datenkanal (41) ein Feldbus, insbesondere ein CAN (Controller Area Network)-Bus, ist.

10. Anordnung nach Anspruch 9,
**dadurch gekennzeichnet, dass** zwischen der Steuereinheit (20) und der mindestens einen Bedienvorrichtung (31, 32, 33, 34) ein zweiter Datenkanal (42) zur Übertragung von digitalen Daten ausgebildet ist, und insbesondere dass die Anordnung so ausgelegt ist, dass über den zweiten Datenkanal (42) mittels des Black-Channel-Prinzips Daten übertragbar sind.

11. Anordnung nach Anspruch 10,
**dadurch gekennzeichnet, dass** der zweite Datenkanal (42) eine erste Sende- und Empfangsstelle auf Seiten der mindestens einen Bedienvorrichtung (31, 32, 33, 34) umfasst, dass der zweite Datenkanal (42) eine zweite Sende- und Empfangsstelle auf Seiten der Steuereinheit (20) umfasst, und dass sowohl die erste als auch die zweite Sende- und Empfangsstelle durch einen Feldbus, insbesondere einen CAN (Controller Area Network)-Bus, ausgebildet ist.

12. Anordnung nach einem der Ansprüche 7 bis 11,
**dadurch gekennzeichnet, dass** zumindest ein Abschnitt des zweiten Datenkanals (42) durch ein Ethernet-Kabel gebildet ist.

13. Anordnung nach Anspruch einem der Ansprüche 9 bis 12,
**dadurch gekennzeichnet, dass** die Energieversorgung der mindestens einen Bedienvorrichtung (31, 32, 33, 34) über den zweiten Datenkanal (42), insbesondere über das Ethernet-Kabel, erfolgt.

14. Anordnung nach einem der Ansprüche 9 bis 13,
**dadurch gekennzeichnet, dass** zumindest ein Abschnitt des zweiten Datenkanals (42) durch eine drahtlose Verbindung, insbesondere durch eine WLAN (Wireless Local Area Network)-Verbindung oder eine Bluetooth-Verbindung, gebildet ist.

15. Anordnung nach einem der Ansprüche 9 bis 14,
**dadurch gekennzeichnet, dass** das Arbeitsgerät (1) ein Kran ist.
